# EUROPÄISCHE PATENTANMELDUNG

(11) **EP 0 575 877 A1**
(43) Veröffentlichungstag der Anmeldung: **29.12.1993**
(21) Anmeldenummer: 93109599.6
(22) Anmeldetag: 16.06.1993
(51) Int. Cl.: B23K 37/04, B01D 37/02

(54) **Einrichtung für das thermische Bearbeiten, insbesondere Atogen- oder Plasmaschneiden, von Werkstücken**

(30) Priorität: 26.06.1992 DE 4220743
(71) Anmelder: MESSER GRIESHEIM GMBH, D-60547 Frankfurt (DE)
(72) Erfinder: Ebeling, Helge, D-6521 Bechtheim (DE); Dieter, Walter, D-5990 Altena (DE)

(57) **Zusammenfassung**

Einrichtung für das thermische Bearbeiten, insbesondere Autogen- oder Plasmaschneiden, von Werkstücken.

Die Erfindung betrifft eine Einrichtung für das thermische Bearbeiten, insbesondere Autogen- oder Plasmaschneiden, von Werkstücken mit einem Wassertisch der mit einer Wasserreinigungsvorrichtung verbunden ist. Um den partikelförmigen Schneidabfall aus dem Wasser zu entfernen, weist die Wasserreinigungsvorrichtung einen Filter (14) auf, auf dem ein Filterhilfsmittel aufbringbar ist.

## Beschreibung

Die Erfindung betrifft eine Einrichtung für das thermische Bearbeiten, insbesondere Autogen- oder Plasmaschneiden, von Werkstücken mit einem Wassertisch, der mit einer Wasserreinigungsvorrichtung verbunden ist.

Beim thermischen Bearbeiten von Werkstücken, beispielsweise Blechen, war eine erhebliche Verunreinigung der Arbeitsplatzumgebung bzw. der Umgebung der automatischen Bearbeitungsstation unvermeidbar. Zur Unterdrückung dieser Umgebungsbelastung sind sogenannte Wassertische entwickelt worden, die unter den Schneidbrennern angeordnet sind und das Werkstück beim Schneiden tragen. Beim Schneiden fallen die Schneidabfälle in das unmittelbar unter dem Werkstück geführte Wasser oder die Werkstücke befinden sich während des Schneidens bereits vollständig unter Wasser, z.B. beim Wasserplasmaschneiden. Durch diese Maßnahme wird die Umweltbelastung an der Schneidstation spürbar verringert. Die verwendeten Materialien können Normal - und legierte Stähle, Aluminiumlegierungen und Buntmetalle sein.

Aus der DE-OS 275 13 72 ist ein Wassertisch bekannt, der aus einem Wasserkasten, einer Vorrichtung zum Verändern des Wasserspiegels im Wasserkasten und einer Vorrichtung zum Sammeln der Schneidrückstände in Form eines Kipprahmens mit Auffangbehälter oder Rinne besteht. Der wannenartig ausgebildete Kipprahmen zur Aufname der Schneidrückstände enthält herausnehmbare Werkstückauflagen.

Nachteilig am bekannten Wassertisch ist, daß die konstruktive Konzeption des Kipprahmens von der Vorraussetzung ausgeht, die Schneidrückstände würden durch Schwerkraft in den dafür vorgesehenen Auffangbehälter gleiten. Im praktischen Fall muß jedoch davon ausgegangen werden, daß eine manuelle Reinigung der Vorrichtung nicht zu umgehen ist. Des weiteren werden durch den Kipprahmen die Schneidrückstände nicht erfaßt, welche als schwebefähiger Schlamm vorliegen und deshalb beim Regulieren des Wasserspiegels aufgewirbelt werden und sich am Boden des Wasserkastens und in der Kammer absetzen. Dies führt dazu, daß der sich am Boden des Wassertisches absetzende Feinschlamm in regelmäßigen Abständen entfernt werden muß, weil die Schlammablagerungen im Wassertisch nach einer bestimmten Betriebszeit den Niveauwechsel des Wasserspiegels unmöglich machen und eine Beckensäuberung erzwingen. Nachteilig ist weiterhin, daß ein Einleiten der im Wassertisch befindlichen Flüssigkeit in die öffentliche Kanalisation nicht möglich ist, da die Abwassergrenzwerte nach Anhang 40 der Abwasserverwaltungsvorschrift der derzeit gültigen Rahmen - Abwasserverwaltungsvorschrift gemäß § 7a des Wasserhaushaltsgesetzes für die beim Brennschneiden entstehenden Feststoffe nicht erfüllt ist. Weiterhin führen die in kleiner Korngrößenfraktion vorliegenden Schlammablagerungen zur Trübung des Wassers wodurch die Bedienbarkeit und die Störungserkennung während der thermischen Bearbeitung verringert wird. Hinzu kommt, daß beim Schneiden von Aluminiumlegierungen innerhalb des Wassertisches Wasserstoff entsteht, der explosionsfähig ist.

Es wurde zwar schon versucht Filterfliese für die Reinigung des Wassers eines Wassertisches einzusetzen. Diese gewährleisteten jedoch keinen Erfolg, da die in großen Mengen bei sehr kleiner Korngrößenfraktion vorliegenden Schneidabfälle durch die Filterfliese nicht ausgefiltert werden.

Ausgehend von dem eingangs geschilderten Stand der Technik liegt der Erfindung die Aufgabe zugrunde, eine Einrichtung zu schaffen, mittels der die beim thermischen Bearbeiten von Werkstücken in einem Wassertisch anfallenden Schneidabfälle von dem Wasser abgetrennt werden können.

Ausgehend von dem im Oberbegriff des Anspruches 1 berücksichtigen Stand der Technik ist die Aufgabe erfindungsgemäß gelöst mit den im kennzeichnenden Teil des Anspruches 1 angegebenen Merkmalen.

Vorteilhafte Weiterbildungen der Erfindung sind in den Unteransprüchen angegeben.

Durch die Erfindung muß die Flüssigkeit des Wassertisches nur gewechselt werden, wenn die gelösten Bestandteile wie Nitrit, Nitrat oder Cromaten das Verfahren beeinträchtigt, weil das durch die erfindungsgemäße Wasserreinigungsvorrichtung gereinigte Wasser im stationären Betrieb in den Tisch zurückgeführt wird. Im Falle des Ablassens in die Kanalisation sind keine weiteren Maßnahmen erforderlich, da die Einhaltung der Abwassergrenzwerte durch die Erfindung sichergestellt ist.

Durch die Erfindung wird ein wirtschaftliches Betreiben der Wasserreinigungsvorrichtung erzielt. Die Reinigung und der Betrieb erfolgen automatisch.

Mit einer Pumpe wird das Wasser des Wassertisches an geeigneten Stellen angesaugt und durch das Filter mit Filterhilfsmittel gedrückt. Bei dem Erreichen eines bestimmten Differenzdruckes wird das Filter in umgekehrter Richtung angeströmt. Es wirft dabei den entstandenen Filterkuchen aus vorteilhaft Kieselgurfilterhilfsmittel und Feststoffen (Schneidabfällen) in einen Schlammbehälter ab, so daß nach diesem Rückspülvorgang das Filter nahezu vollständig regeneriert ist.

Der Schlammbehälter wird automatisch entwässert, bis eine stichfeste Masse bestehend aus Filterhilfsmittel und Feststoffen entsorgt werden kann. Vorteilhaft wird die Filtergröße und die Menge des eingesetzten Filterhilfsmittels so abgestimmt, daß der Zeitraum eines Filtersatzes in der Regel einer Arbeitsschicht entspricht. Die ermittelte Menge des Filterhilfsmittels kann dabei automatisch über ein Dosiergerät oder manuell jeweils für einen Filteransatz in den Vorratsbehälter gegeben werden. Ein automatisches Dosiergerät besteht vorteilhaft aus einem Filterhilfsmittel-Vorratsgefäß mit pneumatischer Schubvorrichtung und Vibrations-Dosierrinne. Dies wird auf einem Gestell über dem Vorratsbehälter des Filterhilfsmittelmischers angeordnet.

Vorteilhaft geschieht das Einleiten des gefilterten Wassers zurück in den Wassertisch durch Düsen, die nahe am Boden angeordnet sind. Sie erfüllen die Aufgabe eines hydraulischen Rührwerkes. Hierdurch wird bei großen Tischflächen die Sedimentation verringert. Es ist selbstverständlich auch möglich, die Düsen als Wasserstrahlpumpen auszubilden, um so den Wirkungsgrad zu steigern.

Ein Ausführsbeispiel der Erfindung ist in der Zeichnung dargestellt und wird im folgenden näher beschrieben.

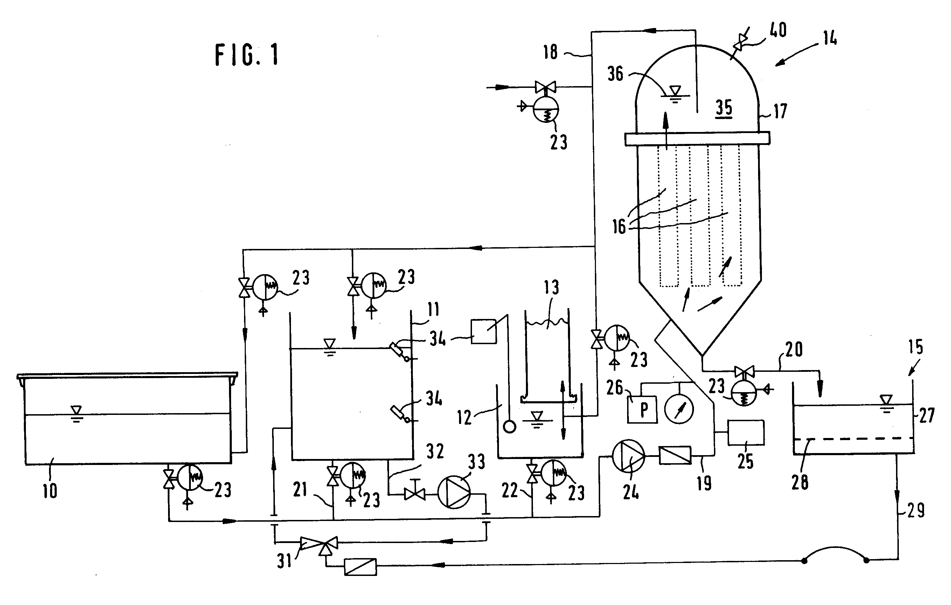

Es zeigen
- Fig. 1: eine schematische Darstellung der Wasserreinigungsvorrichtung,
- Fig. 2: eine Umschalteinheit für Schottwandtische mit zwei Beckenhälften.

Dargestellt ist eine Einrichtung für die Filtration des Wassers des Wasserschneidtisches 10, welche im wesentlichen aus dem Reinwasserbehälter 11, dem Filterhilfsmittelmischer 12 mit dem Vorrats- oder Dosierbehälter 13, dem Filter 14 und der Schlammentwässerung 15 besteht. Erfindungsgemäß weist der Filter Filterkerzen 16 auf, die in einem Filterbehälter 17 angeordnet sind. Ausgangsseitig ist das Filter 14 über Leitung 18 mit dem Filterhilfsmittelmischer 12, mit dem Reinwasserbehälter 11 und mit dem Wassertisch 10 verbunden.

Der Wassertisch ist in an sich bekannter Weise mit einer Niveauregelung ausgestattet und wird daher nicht näher beschrieben.

Eingangsseitig ist das Filter 14 über Leitung 19 mit dem Filterhilfsmittelmischer 12, dem Reinwasserbehälter 11 und dem Wassertisch 10 verbunden.

Über Leitung 20 ist das Filter weiterhin mit der Schlammentwässerung 15 verbunden.

In den Leitungen 18, 19 und 20 sowie den Abzweigleitungen 21, 22 sind pneumatisch ansteuerbare Ventile 23 angeordnet, mittels denen der Zu- und Abfluß der Medien gesteuert wird. Die Ventile sind an sich bekannt und werden nicht näher beschrieben.

In der Leitung 19 ist eine Filterpumpe 24 mit in der Förderrichtung nachgeschaltetem Trockenlaufschutz 25 und Druckwächter 26 angeordnet.

Die Schlammentwässerung besteht im wesentlichen aus einem Behälter 27 mit einem Filter 28 durch den das gereinigte Wasser tritt und sich am Boden sammelt. Der Boden der Schlammentwässerung 15 ist über Leitung 29 mit dem Reinwasserbehälter 11 verbunden. Über eine in einer Ringleitung 32 angeordnete Wasserstrahlpumpe 31 wird das Wasser von der Schlammentwässerung 15 in den Reinwasserbehälter 11 gefördert. Hierzu ist in der Ringleitung 32 eine Hilfspumpe 33 vorgesehen, mit der Reinwasser aus dem Reinwasserbehälter 11 der Wasserstrahlpumpe 31 zugeführt wird, die das gereinigte Wasser der Schlammentwässerung 15 ansaugt und das Reinwasser zusammen mit dem Wasser aus der Schlammentwässerung in den Reinwasserbehälter 11 zurückführt.

Die Einrichtung arbeitet wie folgt:
Filterhilfsmittel, vorzugsweise Kieselgur, wird aus dem dem Vorratsbehälter 13 in vorher ermittelter Menge in den Mischer 12 gegeben und mit dem im Mischer vorhandenen Wasser vermischt. Über Abzweigleitung 21 und 22 wird Reinwasser und das Kieselgurfilterhilfsmittel/Wassergemisch zusammen von der Pumpe 24 zu Filter 14 gefördert. Aufgrund des Durchströmwiderstandes den die Filterkerzen 16 bilden entsteht außerhalb der Filterkerzen ein größerer Druck als innerhalb der Filterkerzen 16, so daß sich der Kieselgurschlamm an den Filterkerzen anlagert bzw. absetzt. Das Wasser strömt über die Filterkerzen 16 zu dem Filterhilfsmittelmischer 12 und zu dem Reinwasserbehälter 11. Reinwasserbehälter 11 und Filterhilfsmittelmischer 12 weisen eine Niveauregulierung 34 für den Wasserstand auf. Die Niveauregulierung kann als Schwimmerschalter ausgebildet sein. Überschüssiges Wasser wird über eine nicht näher dargestellte Überströmöffnung entsorgt.

Während dieses zeitabhängigen Vorganges bei dem Filterhilfsmittel an die Filterkerzen 16 angeschwemmt wird, sind die Ventile 23 des Wassertisches 10 geschlossen. Nachdem eine ausreichende Menge Filterhilfsmittel sich an den Filterkerzen 16 angesetzt hat, werden die in den Abzweigleitungen 21 und 22 angeordneten Ventile 23 geschlossen und das abgangsseitige Ventil 23 des Wassertisches geöffnet, so daß mit Schneidabfällen belastetes Wasser von der Filterpumpe 24 angesaugt und in das Filter 14 gedrückt wird. Das mit Schneidabfall belastete Wasser wird durch das Filterhilfsmittel und die Filterkerzen 16 gedrückt und dabei gereinigt. Über Leitung 18 wird das im Dom 35 sich ansammelnde gereinigte Wasser zu dem Wassertisch zurückgeführt.

Vorteilhaft geschieht das Einleiten des gefilterten Wassers zurück in den Wassertisch durch Düsen, die nah am Boden des Wassertisches 10 angeordnet sind. Sie erfüllen die Aufgabe eines hydraulischen Rührwerkes. Dadurch wird bei großen Tischflächen die Sedimentation verringert.

Die Reinigung des Wassers wird kontinuierlich fortgesetzt um den beim Brennschneiden entstehenden Feinschlamm vor der Sedimentation aus dem Tisch herauszufiltern. Bei starkem Anfall von Feinschlamm oder einer für einen Schlammaustrag ungünstigen Tischform kann die Reinigung auch während der Stillstandzeit der Brennschneidmaschine fortgesetzt werden. Die Wasserreinigungsvorrichtung arbeitet solange, bis der in der Leitung 19 angeordnete Druckwächter 26 einen vorgegebenen Druckwert erreicht, der einen Wert für die Reinigung des Filters darstellt.

Der weiterhin in der Leitung 19 angeordnete Trockenlaufschutz ist eine Sicherheitseinrichtung, die dafür vorgesehen ist, ein Heißlaufen der Filterpumpe zu vermeiden, wenn der Wasserzufluß von dem Wasserschneidtisch 10 unterbrochen ist.

Wenn der Druckwächter den vorgegebenen "Reinigungsdruckwert" anzeigt bzw. meldet, wird die Förderung des mit Schneidabfall belasteten Wassers des Wassertisches unterbrochen und das in Leitung 20 angeordnete Ventil der Schlammentwässerung 15 geöffnet. Gleichzeitig wird die Filterpumpe 24 abgeschaltet. Aufgrund des dann fehlenden Druckes durch die Pumpe 24 und einer im Dom 35 oberhalb des Wasserspiegels komprimierten Gasblase wird das Wasser entgegensetzt zur Förderrichtung der Filterpumpe 24 durch die Filterkerzen gedrückt. Das Filter wirft auf diese Art den entstandenen Filterkuchen aus Kieselgurfilterhilfsmittel und den Schneidabfällen in den Schlammbehälter ab. Nach diesem Rückspülvorgang ist das Filter nahezu vollständig regeneriert. Der Rückspülvorgang kann durch in den Dom 35 eingeblasene Druckluft bzw. eingepumptes Reinwasser unterstützt werden.

Der Schlammbehälter 27 wird in den nächsten Betriebszyklen automatisch entwässert bis eine stichfeste Masse oberhalb des Filters 28 entsteht und entsorgt werden kann. Das gereinigte Wasser wird über Leitung 29 von der Wasserstrahlpumpe 31 angesaugt. Die Wasserstrahlpumpe 31 wird über Hilfspumpe 33 betrieben die Reinwasser aus dem Reinwasserbehälter 11 abzieht und über die Wasserstrahlpumpe 31 dem Reinwasserbehälter 11 wieder zuführt.

Die oben beschriebene Wasserreinigungseinrichtung ist mit einer separaten speicherprogrammierbaren Steuerung ausgerüstet und/oder mit der speicherprogrammierbaren Steuerung der Brennschneidmaschine verbunden, über die die Schaltvorgänge der Ventile bzw. der Reinigungsvorgang des Filters durchgeführt wird.

Nach einer vorteilhaften Ausführungsform ist dem Vorratsbehälter 13 für das Filterhilfsmittel ein Dosiergerät zugeordnet, das eine nicht näher dargestellte pneumatische Schubvorrichtung und eine Vibrationsdosierrinne aufweist.

Vorteilhaft kann der Schlammentwässerung auch eine automatische Fördereinheit zum Austrag der stichfesten Masse zugeordnet werden.

In der Erfindung wird als Filterhilfsmittel vorzugsweise die hochporöse, sehr wirtschaftliche Kieselgur genannt.

Daneben können auch Perlite und alle für den Zweck geeigneten Filterhilfsmittel eingesetzt werden.

Eine Gefährdung durch im Filtergehäuse 17 entstehenden Wasserstoff beim Herausfiltern von Aluminiumschlamm kann durch Einsatz eines Ventils 40 ausgeschlossen werden, welches normal offen ist, wodurch der Filterinnenraum hierdurch im Stillstand druckentlastet wird. Bei der Schlammentwässerung 15 kann aufgrund der offenen Bauform des Schlammaustragungsbehälters 27 eine Gefährdung durch den entstehenden Wasserstoff ausgeschlossen werden, wenn er in ausreichend großen Räumlichkeiten untergebracht ist und der entstehende Wasserstoff frei nach oben abziehen kann, ohne das er die Möglichkeit hat, in darüber angeordnete Hohlräume zu dringen.

Ein weiteres vorteilhaftes Ausführungsbeispiel besteht darin, daß zur besseren hydraulichen Mischung des Wassertischinhalts eine größere Wassermenge als die gefilerte dem Wassertisch entnommen und wieder zugeführt wird (Teilstromfilterung). Durch diese Maßnahme findet eine Aufwirbelung der sedimentierten Schneidpartikel statt bzw. es wird eine solche verhindert.

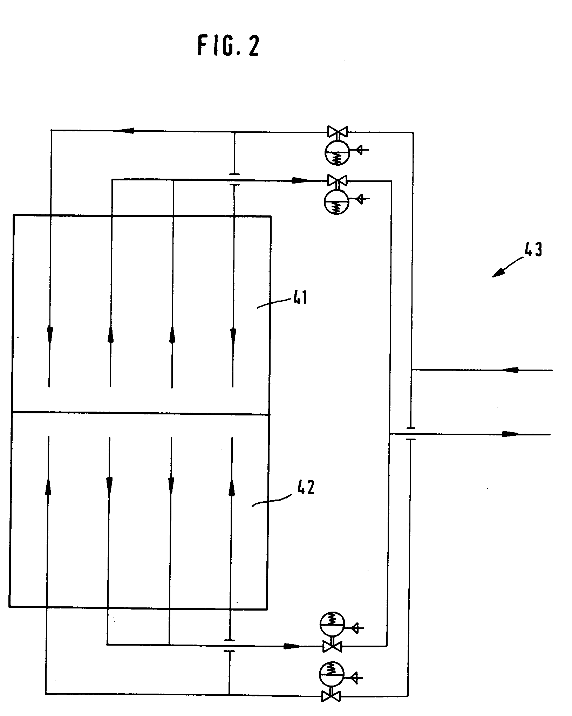

In Fig. 2 ist ein aus zwei Beckenhälften 41, 42 bestehender Wassertisch 10 dargestellt. Die Zu- und Abfuhr des Wassers in die beiden Beckenhälften wird durch eine Umschalteinheit 43 gesteuert. Die Umschalteinheit 43 dient dazu, den gesamten geförderten Wasserstrom gezielt der einen oder anderen Beckenhälfte zuzuleiten. Die Einrichtung arbeitet diskontinuierlich, so daß abwechselnd das Wasser der einen oder anderen Beckenhälfte dem Filter 14 zugeführt wird. Hierdurch wird vorteilhaft eine effizientere Reinigungswirkung erzielt sowie eine intensivere Mischleistung erreicht.

## Patentansprüche

1. Einrichtung für das thermische Bearbeiten, insbesondere Autogen- oder Plasmaschneiden, von Werkstücken mit einem Wassertisch der mit einer Wasserreinigungsvorrichtung verbunden ist,
dadurch gekennzeichnet,
daß die Wasserreinigungsvorrichtung einen Filter (14) aufweist, auf dem ein Filterhilfsmittel aufbringbar ist.

2. Einrichtung nach Anspruch 1,
dadurch gekennzeichnet,
daß das Filter (14) vorzugsweise mehrere in einem Filterbehälter (17) angeordnete Filterkerzen (16) aufweist, an die das Filterhilfsmittel aufschwemmbar ist.

3. Einrichtung nach Anspruch 1 oder 2,
dadurch gekennzeichnet,
daß das Filterhilfsmittel ein feinkörniger oder fasriger Stoff, vorzugsweise Kieselgur, ist.

4. Einrichtung nach einem der Ansprüche 1 bis 3,
dadurch gekennzeichnet,
daß das Filter (14) über Leitungen (18, 19) mit einer Reinwasserversorgung (11) und einer Filterhilfsmittelversorgung (12, 13) verbunden ist.

5. Einrichtung nach einem der Ansprüche 1 bis 4,
dadurch gekennzeichnet,
daß die Filterhilfsmittelversorgung aus einem Mischer (12) und einem Vorratsbehälter (13) oder einem Dosiergerät besteht und in dem Mischer (12) das Filterhilfsmittel und Wasser mischbar sind.

6. Einrichtung nach einem der Ansprüche 1 bis 5,
dadurch gekennzeichnet,
daß das Filter (14) mit einer Schlammentwässerung (15) verbunden ist, in der Filterhilfsmittel und Schneidabfall von dem Wasser trennbar sind.

7. Einrichtung nach einem der Ansprüche 1 bis 6,
dadurch gekennzeichnet,
daß die Schlammentwässerung (15) einen Behälter (27) aufweist, der mit der Reinwasserversorgung (11) verbunden ist und das Wasser der Schlammentwässerung (15) über eine vom Reinwasser betriebene Wasserstrahlpumpe (31) förderbar ist.

8. Einrichtung nach einem der Ansprüche 1 bis 7,
dadurch gekennzeichnet,
daß der Wassertisch (10) über eine Leitung (19) mit dem Filter (14) verbunden ist und in der Leitung (19) eine Pumpe mit nachgeschaltetem Trockenlaufschutz (25) und Druckwächter (26) angeordnet ist.
